# EUROPÄISCHE PATENTANMELDUNG

(11) **EP 0 919 176 A1**
(43) Veröffentlichungstag der Anmeldung: **02.06.1999**
(21) Anmeldenummer: 97810890.0
(22) Anmeldetag: 21.11.1997
(51) Int. Cl.: A47J 43/12

(54) **Vorrichtung und Verfahren zur Erzeugung und Ausgabe von Milchschaum und/oder erhitzter Milch**

(71) Anmelder: EGRO AG, CH-5443 Niederrohrdorf (CH)
(72) Erfinder: Leutwyler, Robert, 8106 Adlikon (CH)
(74) Vertreter: Frauenknecht, Alois J.

(57) **Zusammenfassung**

Eine erfindungsgemässe Vorrichtung sowie ein Verfahren erlauben die Ausgabe von kalter Milch, heisser Milch sowie von kaltem Milchschaum und heissem Milchschaum. Hierfür wird gekühlte Milch 100 über Leitungen (2,2a,2b) unter einem Überdruck auf einen Kegel (15) mit Kerb-Düsen (15') geführt und in einem Prallbecher (20) bei hoher Geschwindigkeit zerkleinert und fliesst als behandeltes Produkt (100') über eine Ausflussdüse (27) aus. Durch Anheben einer Verstellbüchse (8) kann Luft über Bohrungen (34') in den Milchstrom gelangen, gleichzeitig wird dabei der Kegel (15) tiefer in die Leitung 2b geschoben; es entsteht eine Düsenwirkung, die Milch wird unter hohen resultierenden Scherkräften verschäumt. Liegt die Verstellbüchse (8) mit ihrer Dichtfläche (9,10) auf den Bohrungen (34') auf, fliesst Milch aus der Düse (27). Durch eine Dampfzufuhr (40) und eine Milchdusche (18) lassen sich die Produkte erwärmen.

## Beschreibung

Die vorliegende Erfindung bezieht sich auf eine Vorrichtung gemäss dem Oberbegriff des Patentanspruchs 1 sowie auf ein Verfahren zur Erzeugung und Ausgabe von Milchschaum und/oder erhitzter Milch.

Es ist eine Vorrichtung bekannt (EP -B1- 0 195 750) zum Emulgieren von Luft und Milch, insbesondere zur Zubereitung von Cappuccino und ähnlichen Getränken, in der über Leitungen Milch und Dampf zusammengeführt werden, wobei mittels eines Venturirohrs Milch angesaugt und das Gemisch aus Milch und Dampf in einer Emulgierkammer turbulent verströmt werden.

Diese Vorrichtung weist den Nachteil auf, dass sie nur heissen Milchschaum ausgibt, was für zahlreiche Getränke und Speisen ungeeignet ist und was insbesondere in angelsächsischen Ländern gegen die traditionellen Trink- und Essgewohnheiten verstösst. Im weiteren ist die Homogenität und langzeitige Formstabili

tät des erzeugten Milchschaums für im voraus produzierte Speisen (Fast Food) ungenügend, so dass die bekannte Vorrichtung auf deren Einsatz in Kaffeemaschinen, zur Erzeugung von Cappuccino mit warmem Schaum, beschränkt ist.

Die Erfindung hat daher den Zweck, eine Vorrichtung und ein Verfahren zu schaffen, welche bei der Speisenzubereitung universell einsetzbar sind, sowohl wahlweise warmen oder kalten Milchschaum ausgeben bzw. erzeugen, als auch zur Ausgabe von kalter oder warmer Milch geeignet sind.

Es ist ferner Aufgabe der Erfindung, die Vorrichtung kompakt und abnehmbar auszugestalten, so dass sie auch in Geschirrspülern hygienisch einwandfrei zu reinigen ist.

Ausserdem muss die Vorrichtung an bestehende, in der Gastronomie bereits bekannte Milchkühler und Gefässe sowie Dampferzeuger anschliessbar sein.

Die konstruktive Ausgestaltung der Vorrichtung soll insbesondere für eine Integration in moderne Kaffeeautomaten des Gastgewerbes geeignet sein.

Erfindungsgemäss wird diese Aufgabe durch eine Vorrichtung mit den Merkmalen des Anspruchs 1 und durch ein Verfahren nach Anspruch 12 gelöst.

Die Vorrichtung nach dem Patentanspruch lässt die wahlweise Ausgabe von kalter Milch, warmer Milch, kaltem Milchschaum und warmem Milchschaum zu.

Der unter einem Überdruck auf dem Boden des Prallbechers auftreffende Milchstrom zerstäubt mit hoher Geschwindigkeit in kleinste Teile und bildet an den Seitenwänden des Bechers eine dünne Schicht, welche, entgegen der einströmenden Milch, nach oben verdrängt wird und in den Sammelraum abfliesst.-Das jeweils gewünschte Produkt: Kalte oder warme Milch, kalter oder warmer Milchschaum ist dabei in einfacher Weise wählbar.

In abhängigen Ansprüchen sind vorteilhafte Weiterbildungen des Erfindungsgegenstands beschrieben.

Durch die Zwischenschaltung eines Kegelstumpfes bildet sich ein kegelförmiger Strahl, der eine gleichmässige Verteilung der Milch, unter einem schiefen Winkel zum Boden ergibt und den Abfluss in die Gegenrichtung begünstigt, Anspruch 2.

Vorteilhaft wirken sich Kerbdüsen nach Anspruch 3 aus, sie erlauben den Kegelstumpf in die Austrittsbohrung der Milchzuführung partiel einzuführen und erhöhen damit den Druck der Strömung.

Durch den Einbezug von konzentrischen Durchbrüchen in einer Blende, Anspruch 4, werden die resultierenden Scherkräfte nochmals erhöht, was zu einer optimalen Zerkleinerung der Milchteile führt.

Alternativ zum Kegelstumpf werden auch durch eine zentrale Düse gute Werte erzielt; nachteilig ist jedoch die Verstopfungsgefahr der einzigen, notwendigen kleinen Düsenbohrung, vgl. Anspruch 5.

Durch den Einbezug einer Verstellbüchse nach Anspruch 6, kann Milchschaum erzeugt werden und zwar in der Stellung der freigelegten Luftzuführungen, bzw. Milch ausgegeben werden in der oberen Endstellung mit verschlossenen Luftzuführungen.

Wird die Verstellbüchse seitlich mit Kulissen versehen, kann auch bei geringem zur Verfügung stehendem Platz mittels eines Doppelschiebers nach Anspruch 7, die gewünschte Verstellung erreicht werden.

Durch einen Antrieb gemäss Anspruch 8 lassen sich die Luftzuführungen durch die Dichtflächen, Anspruch 6, luftdicht verschliessen.

Anstelle eines Getriebemotors lassen sich auch wirtschaftlich günstigere Antriebe für den Schieber realisieren, vgl. Anspruch 9.

Zur Erhitzung der auströmenden Milch hat sich eine Milchdusche nach Anspruch 10 bewährt, welche an eine in einem Kaffeeautomaten bereits vorhandene Dampfquelle angeschlossen ist.

Das Betriebsverfahren nach Anspruch 12 nennt bevorzugte Drucke für eine auf ca. 6° C gekühlte Milch. Bei diesen Drucken lässt sich ein "steifer" Milchschaum auch mit teilentrahmter Milch erzeugen.

Zur Erhitzung der Milch auf die in Heissgetränken gewünschte Temperatur dienen die in Anspruch 13 aufgeführten Angaben.

Der unter einem Überdruck auf den Boden 21 des Prallbechers 20 auftreffende Milchstrom bildet ein Flüssigkeitsniveau, in welchem durch die zerstäubten Milchstrahle eine optimale Menge Luft eingetragen wird. - Der so erzeugte Milchschaum überströmt peripher den Prallbecher 20 und fliesst über den Sammelraum 25 ab.

Nachfolgend werden anhand von Zeichnungen Ausführungsbeispiele des Erfindungsgegenstands näher erläutert.

Es zeigen:
- Fig. 1: eine Schnittdarstellung eines Milch-Produktekopfs, angebaut an die Gehäusewand eines Kaffeeautomaten, in seiner Funktion zur Erzeugung von Milchschaum,
- Fig. 2: die Schnittdarstellung Fig. 1 in der Funktion zur Erhitzung von Milch, wobei die in einem Prallbecher auftreffende Milch eingezeichnet ist,
- Fig. 3: eine Schnittdarstellung durch den Kegelstumpf Fig. 1 und Fig. 2 und
- Fig. 4: eine Draufsicht auf den Kegelstumpf Fig. 3 mit seiner Blende.

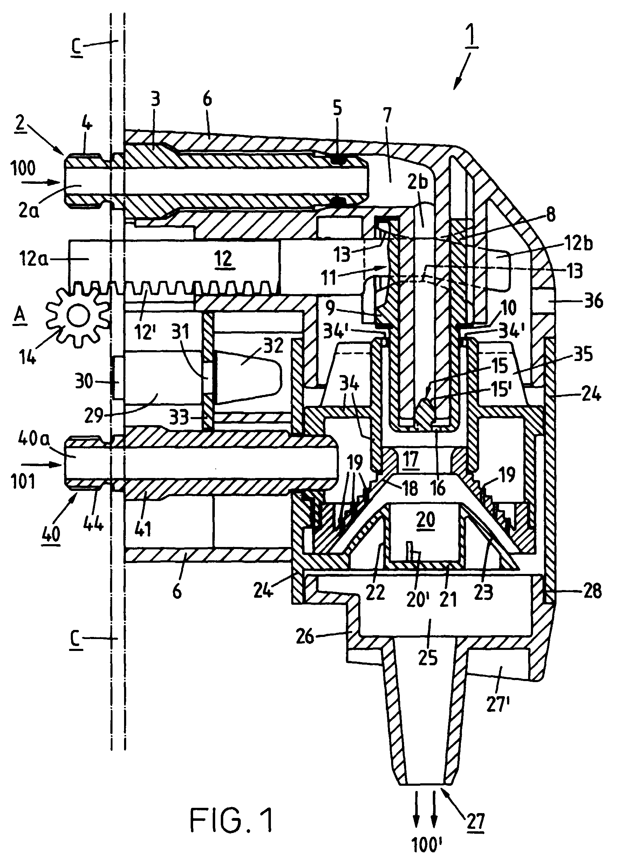

Gemäss Figur 1 ist mit 1 ein Milch-Produktekopf bezeichnet. Dieser Milch-Produktekopf ist auf die Gehäusewand eines Kaffeeautomaten C aufgesetzt. Innerhalb des Kaffeeautomaten C befinden sich die notorisch bekannten Geräteteile wie Brühgruppe, Dampferzeuger, Milchpumpe, Milchkühler und entsprechende Vorratsbehälter etc.

Kalte Milch 100 wird über eine Milchzuführung 2 unter einem Druck von 6 bar zuerst über eine horizontale Rohrleitung 2a und dann über eine vertikale Rohrleitung 2b geführt; die notwendige Strömungsänderung erfolgt in einem Umlenk-Rohrteil 7 im Gehäuse 6. Die horizontale Rohrleitung 2a befindet sich in einem Zentrier- und Anschlussstutzen 3 mit einem endseitig vorhandenen, üblichen Anschlussgewinde 4. Zur Abdichtung der Milchzuführung 2 gegenüber dem Gehäuse 6, dem eigentlichen Produktekopf, ist eine im Stirnbereich des Stutzens 3 eingelassene Gummidichtung 5, ein üblicher O-Ring, vorgesehen.

Die vertikale Rohrleitung 2b ist von einer vertikal verschiebbaren Verstellbüchse 8, dicht und gleitfähig umgeben. Die Verstellbüchse 8 besitzt in ihrem Mittelteil einen Flansch 9 mit einer ringförmigen Flachdichtung 10.

Die Verstellbüchse 8 taucht in eine Büchse 35 ein, welche in einer Büchsenführung 34 Luftzuführungen 34' aufweist, die ihrerseits durch den Flansch 9 mit seiner Flachdichtung 10 verschliessbar sind.

Die Büchse 35 besitzt zudem Büchsenführungen 34, die in einer weiteren Büchse, einer Einschieb-Büchse 24 zentriert sind.

Im oberen Teil des Gehäuses 6 ist eine Bohrung vorgesehen welche als Lufteinlass 36 dient.

Auf der unteren Stirnseite der Verstellbüchse 8 ist - hier einstückig gezeichnet - ein Kegelstumpf 15, mit drei Kerb-Düsen 15' und ebenfalls drei in einer Blende 42 vorhandenen Austrittsöffnungen 16, eingesetzt. Der Kegelstumpf 15 ragt dabei vollständig in die vertikale Rohrleitung 2b.

In der Büchse 35 ist stirnseitig eine kalottenförmige Milchdusche 18 mit einem Milchdurchlass 17 und einer Vielzahl von Dampfdurchlässen 19 eingesetzt. Umgeben ist die Milchdusche 18 von einer Einschieb-Büchse 24 mit einem Stütz- und Überlaufteil 23, in welchem ein Prallbecher 20 zentriert ist.

Der Prallbecher 20 besitzt einen flachen Boden 21 und senkrechte Seitenwände 22. Zur völligen Entleerung in einen Sammelraum 25 mit Ausflusskopfteil 26 und Ausflussdüse 27 dient ein bodenseitiger, vertikaler Schlitz 20'. Das Ausflusskopfteil 26 ist mittels einer - vereinfacht gezeichneten - Gewindeverbindung 28 in die Einschieb-Büchse 24 eingeschraubt.

Ein äusserer Abdeckring 27' ist aus ästhetischen Gründen vorgesehen und erleichtert die behandelte Milch 100' manuell zentriert in darunter gestellte Gefässe abzufüllen bzw. die darin befindlichen Produkte zu garnieren.

Die Dampfdurchlässe 19 der Milchdusche 18 werden durch eine Dampfzuführung 40 versorgt, welche ähnlich ausgebildet ist wie die Milchzuführung 2; diese Zuführung 40 weist in einem Zentrier- und Anschlussstutzen 41 eine Rohrleitung 40a, zum Anschluss an eine Dampfquelle 101, auf und ragt in die Büchse 35 hinein. Der eigentliche Dampfanschluss erfolgt über eine notorisch bekannte Rohrverbindung am Anschlussgewinde 44.

Betätigt wird die vertikal angeordnete Verstellbüchse 8 an zwei einander gegenüberliegenden seitlichen Ausnehmungen 11 durch einen Schieber 12 mit seinen zwei aussenseitigen kulissenartigen Doppelschiebern 12b. Der Schieber 12 ragt mit einem Zahnstangenteil 12a in den Kaffeeautomaten C hinein. Im Automaten C befindet sich ein Getriebemotor A, von dem lediglich sein Antriebs-Zahnritzel 14 eingezeichnet ist, das in die Verzahnung 12' des Schiebers 12 eingreift.

Wie aus Fig. 1 ersichtlich, ist die Kulisse des Doppelschiebers 12b an ihrer oberen Seite mit dem oberen Kulissenteil 13 in der Verstellbüchse 8 mechanisch in Kontakt, d.h. die Verstellbüchse 8 befindet sich in ihrer oberen Endstellung.

Das Gehäuse 6 lässt sich mit einem Handgriff am Kaffeeautomaten C befestigen und ebenso leicht lösen. Hierzu wird lediglich ein aus dem Gehäuse 6 herausragender, federbelasteter Flachschieber 33 manuell verschoben und gleichzeitig, mit der selben Hand, das Gehäuse 6 auf die beiden Zuführungen 2 und 40 aufgeschoben. Beim Loslassen drückt die hier nicht eingezeichnete Feder den Flachschieber 33 in eine Eindrehung 31 eines Stütz- und Haltezapfens 29 mit Zentrierkonus 32, der seinerseits in seiner Andrehung 30 als Stütz- und Haltezapfen auf der Gehäusewand des Kaffeeautomaten C aufliegt.

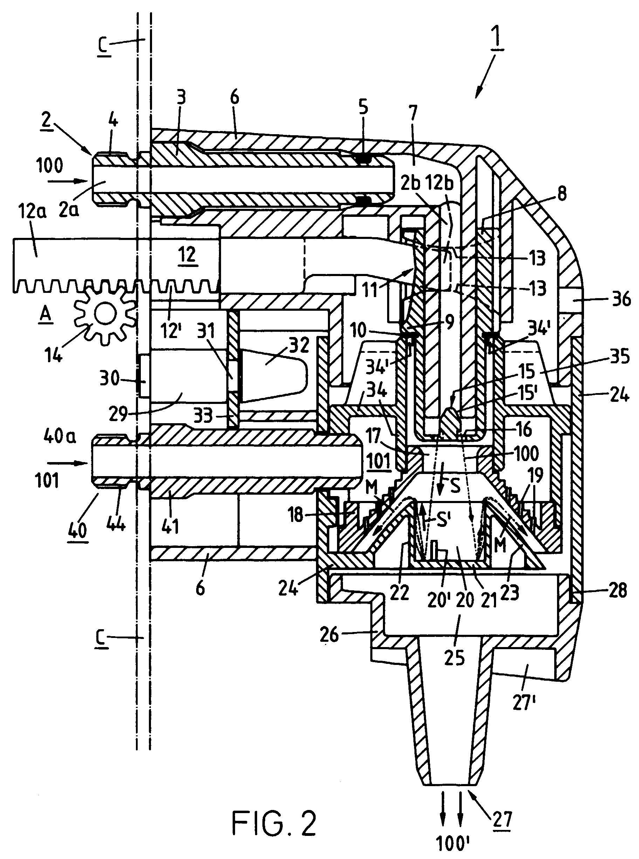

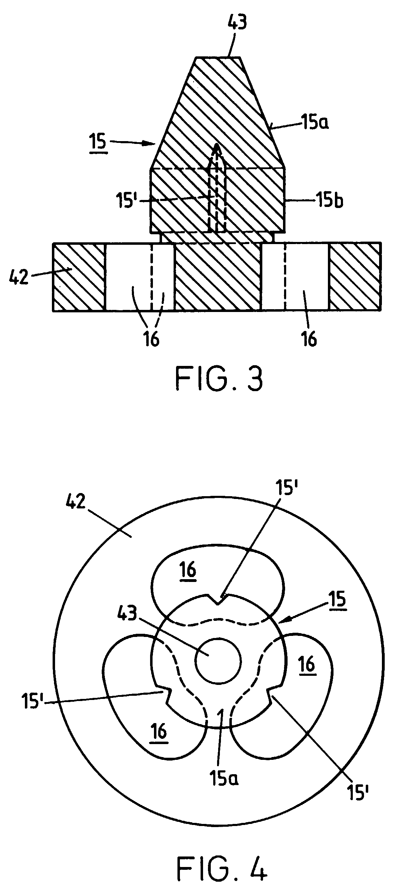

Die Darstellung Fig. 1 zeigt den Milch-Produktekopf bei der Erzeugung von Milchschaum. Dabei hat sich besonders der Kegelstumpf 15, vgl. Fig. 3 und Fig. 4 zur Umlenkung und Druckerhöhung des Milchstromes bewährt. Die Milch wird dabei, siehe Schnittdarstellung Fig. 3, von der Stirnfläche 43 des Kegelstumpfes 15, entlang der Kegelfläche 15a abgelenkt und kann durch drei unter einem Winkel von 120° angeordneten Kerb-Düsen 15' mit hoher Geschwindigkeit durch ebenfalls drei Austrittsöffnungen 16 in einer Blende 42 in den Milchdurchlass 17 treten, vgl. Fig. 2.

Die Kerb-Düsen 15' sind dreikantförmige Nuten im zylindrischen Teil 15b des Kegelstumpfs 15, welche durch ihr Einschieben in die vertikale Milchleitung 2b zu Spritzdüsen werden.

Fig. 2 zeigt den selben Produktekopf 1 mit der Verstellbüchse 8 in ihrer unteren Endstellung, dies bedeutet, dass der Flansch 9 mit seiner Dichtung 10 die Luftdurchlässe 34' verschliesst, so dass keine Luft in die Milch eindringt.

In dieser unteren Lage der Verstellbüchse 8, Fig. 2, ist ersichtlich, dass das zylindrische Teil 15b, vgl. Fig. 3, des Kegelstumpfs 15 gleichzeitig aus der vertikalen Milchleitung 2b ausgerückt ist, wodurch ein Ringspalt entsteht und die Milch beinahe widerstandsfrei auströmt.

Der typische Milchfluss M im Prallbecher 20 ist durch die kalte Milch 100 und die Strömungsrichtung S charakterisiert. Nach dem Auftreffen der kalten Milch 100 auf dem Boden 21 wird diese in die entgegengesetzte Strömungsrichtung S' umgelenkt, und strömt als konzentrischer Milch-Film über die peripheren Seitenwände 22 in den Sammelraum 25 und wird über den Ausfluss 27 ausgegeben.

Die in Fig. 2 gezeichnete Betriebsstellung der Verstellbüchse 8 lässt auch die Ausgabe von kalter Milch zu. In der gleichen Stellung kann durch einfaches Zuschalten von Dampf mit einer Temperatur von 122° C heisse Milch von 65° C erzielt werden, wobei die Milchdusche 18 als guter Wärmetauscher wirkt.

Selbstverständlich könnte kalte Milch auch ohne Benutzung des Milch-Produktekopfes 1, beispielsweise durch eine separate Leitung (mit Ventil und Düse) ausgegeben werden.

Ebenfalls ist der Milch-Produktekopf 1 nicht auf den Einsatz in Kaffeeautomaten beschränkt; er könnte als eigenständiges Gerät, beispielsweise für die Erzeugung und das Garnieren von vorfabrizierten Speisen und Nachspeisen (Desserts) verwendet werden.

### Bezeichnungsliste

- 1: Milch-Produktekopf
- 2: Milchzuführung
- 2a: Rohrleitung Milch (horizontal)
- 2b: Rohrleitung Milch (vertikal)
- 3: Zentrier- und Anschlussstutzen
- 4: Anschlussgewinde (Rohrverbindung)
- 5: Gummidichtung (O-Ring)
- 6: Gehäuse (Produktekopf)
- 7: Umlenk-Rohrteil
- 8: Verstellbüchse
- 9: Flansch von 8
- 10: Dichtung / Flachdichtung (Neopren)
- 11: seitliche Ausnehmungen in 8
- 12: Schieber
- 12': Verzahnung
- 12a: Zahnstangenteil von 12
- 12b: Doppelschieber (Kulisse)
- 13: Kulissenteile in 8
- 14: Antriebs-Zahnritzel
- 15: Kegelstumpf
- 15a: Kegelfläche von 15
- 15b: zylindrisches Teil von 15
- 15': Kerb-Düsen
- 16: Austrittsöffnungen (drei)
- 17: Milchdurchlass
- 18: Milchdusche
- 19: Dampfdurchlässe in 18
- 20: Prallbecher
- 20': Entleerungs-Schlitz
- 21: Boden von 20
- 22: Seitenwände / Peripherie (von 20)
- 23: Stütz- und Überlaufteil von 20
- 24: Einschieb-Büchse
- 25: Sammelraum für Milch
- 26: Ausflusskopfteil
- 27: Ausfluss/Ausflussdüse
- 27': Abdeckring (ästhetisch)
- 28: Gewindeverbindung (vereinfacht)
- 29: Stütz- und Haltezapfen
- 30: Andrehung von 29
- 31: Eindrehung in 29
- 32: Zentrierkonus (bombiert)
- 33: Flachschieber (federbelastet)
- 34: Büchsenführung
- 34': Luftzuführungen in 34
- 35: Büchse (Führung)
- 36: Lufteinlass
- 40: Dampfzuführung
- 40a: Rohrleitung Dampf
- 41: Zentrier- und Anschlussstutzen
- 42: Blende
- 43: Stirnfläche von 15
- 44: Anschlussgewinde (Rohrverbindung)
- 100: kalte Milch
- 100': behandelte Milch
- 101: Dampf / Dampfquelle
- A: Antrieb / Getriebemotor (mit Ritzel 14)
- C: Kaffeeautomat (Gehäusewand)
- M: Milchfluss
- S: Strömungsrichtung
- S': Strömungsrichtung, umgelenkt

## Patentansprüche

1. Vorrichtung zur Erzeugung und Ausgabe von Milchschaum und/oder erhitzter Milch, welche in einem Auslasskopf angeordnet ist und durch eine Milch fördernde Pumpe und eine zuschaltbare Dampfquelle gespeist ist, dadurch gekennzeichnet, dass kalte Milch (100) unter einem Überdruck in einen konzentrisch und beabstandet zur Austrittsbohrung der Milchzuführung (2; 2a,2b) angeordneter Prallbecher (20) strömt, auf dessen Boden trifft und sich zerteilt, so dass der Milchfluss (M) im Prallbecher (20) eine Umlenkung der Strömungsrichtung (s, s') erfährt und abgebremst, diesen an seinen Seitenwänden (22) überströmt und dass ein zum Prallbecher (20) in der urprünglichen Strömungsrichtung (s) beabstandet angeordneter konzentrischer Sammelraum (25) mit zentralem Ausfluss (27) vorgesehen ist, der die behandelte Milch (100') zur Ausgabe freigibt.

2. Vorrichtung nach Anspruch 1, dadurch gekennzeichnet, dass zwischen der Austrittsbohrung der Milchzuführung (2; 2a,2b) und dem Prallbecher (20) ein Kegelstumpf (15) zwischengeschaltet ist, welchen die Milch (100) umspült.

3. Vorrichtung nach Anspruch 2, dadurch gekennzeichnet, dass der Kegelstumpf (15) auf seiner Kegelfläche (15a) Kerbdüsen (15') aufweist.

4. Vorrichtung nach Anspruch 2 oder 3, dadurch gekennzeichnet, dass dem Kegelstumpf (15) eine Blende (42) mit konzentrisch angeordneten Durchbrüchen (16) nachgeschaltet ist.

5. Vorrichtung nach Anspruch 1, dadurch gekennzeichnet, dass zwischen der Austrittsbohrung der Milchzuführung (2; 2a,2b) und dem Prallbecher (20) eine zentrale Düse zwischengeschaltet ist.

6. Vorrichtung nach Anspruch 4 oder 5, dadurch gekennzeichnet, dass der Kegelstumpf (15) oder die zentrale Düse Bestandteil einer axial verschiebbaren Verstellbüchse (8) mit Flansch (9) ist, und dass der Flansch (9) mittels einer Dichtung (10), durch ein axiales Verschieben der Verstellbüchse (8) in ihrer Büchsenführung (34), Luftzuführungen (34') in einer oberen Endstellung freilegt bzw. in einer unteren Endstellung verschliesst.

7. Vorrichtung nach Anspruch 6, dadurch gekennzeichnet, dass in der Verstellbüchse (8) seitliche schlitzförmige Ausnehmungen mit bogenförmigen Kulissenteilen (13) vorgesehen sind, in welche ein Schieber (12) mit einem endseitig gabelartigen Doppelschieber (12b) eingreift.

8. Vorrichtung nach Anspruch 7, dadurch gekennzeichnet, dass der Schieber (12) im Bereich seiner zweiten Endseite ein Zahnstangenteil (13) aufweist, in welches ein durch einen Getriebemotor (A) mit umschaltbarer Drehrichtung angetriebenes Ritzel (14) eingreift und den Schieber (12) in eine vordere und in eine hintere Endstellung bewegt.

9. Vorrichtung nach Anspruch 7, dadurch gekennzeichnet, dass der Schieber (12) im Bereich seiner zweiten Endseite pneumatisch oder elektromagnetisch angetrieben ist.

10. Vorrichtung nach Anspruch 6, dadurch gekennzeichnet, dass oberhalb des Prallbechers (20) eine Milchdusche (18) mit zentralem Milchdurchlass (17) und kalottenförmig angeordneten Dampfdurchlässen (19) vorgesehen ist, welche mit einer Dampfquelle (101) verbunden sind.

11. Vorrichtung nach Anspruch 1, dass diese einen manuell betätigbaren federbelasteten Flachschieber (33) mit einer zentralen Aussparung aufweist, welcher in seiner Ruhestellung in eine Eindrehung (31) eines Stütz- und Haltezapfens (29) eingreift.

12. Verfahren zum Betrieb einer Vorrichtung nach Anspruch 1, zur Erzeugung und Ausgabe von kaltem oder warmem Milchschaum, welche Vorrichtung in einem Auslasskopf angeordnet ist und durch eine Milch fördernde Pumpe und eine zuschaltbare Dampfquelle gespeist ist und wobei koaxiale Luftzuführungen im Bereich der strömenden Milch vorgesehen sind, dadurch gekennzeichnet, dass gekühlte Milch unter einem Überdruck von 3 bis 12 bar über einen Kegelstumpf und/oder wenigstens eine Düse strömend und zerstäubend geführt wird, dass diese freiströmend auf den Boden eines Prallbechers auftrifft, sich in Form kleinster Milchteile zerlegt, dort zusätzlich abgebremst wird, dass sich diese Milchteile entgegen der einströmenden Milch peripher, an den Seitenwänden des Prallbechers in einer dünnen Schicht anlegen und diesen konzentrisch überströmend, in einen Sammelraum gefasst, ausgegeben werden.

13. Verfahren zum Betrieb einer Vorrichtung nach Anspruch 10 zur Ausgabe von warmen Milchprodukten, dadurch gekennzeichnet, dass zur Erhitzung der Milchteile auf eine Temperatur zwischen 45° C und 70° C im überströmenden Teil des Prallbechers über wenigstens eine Düse, Dampf mit einer Temperatur von 95° C bis 125° C eingeleitet wird.

14. Verfahren zum Betrieb einer Vorrichtung nach Anspruch 12 oder 13, dadurch gekennzeichnet, dass zur Erzeugung von Milchschaum die Luftzuführungen freigelegt werden.
